# EUROPÄISCHE PATENTSCHRIFT

(11) **EP 1 151 552 B1**
(45) Veröffentlichungstag und Bekanntmachung des Hinweises auf die Patenterteilung: **29.09.2004**
(21) Anmeldenummer: 00912379.5
(22) Anmeldetag: 16.02.2000
(51) Int. Cl.: H04B 3/56

(54) **SCHALTUNG ZUR KAPAZITIVEN ANKOPPLUNG EINER DATENÜBERTRAGUNGSEINRICHTUNG AN EIN ENERGIEÜBERTRAGUNGSNETZ, UND KOPPELEINHEIT MIT ANKOPPELSCHALTUNG**
CIRCUIT FOR CAPACITIVELY COUPLING DATA COMMUNICATION EQUIPMENT TO A POWER LINE AND A COUPLING UNIT WITH A COUPLING CIRCUIT
CIRCUIT DE COUPLAGE CAPACITIF D'UN DISPOSITIF DE TRANSMISSION DE DONNEES A UN RESEAU DE TRANSMISSION D'ENERGIE, ET UNITE DE COUPLAGE COMPORTANT UN CIRCUIT DE COUPLAGE

(30) Priorität: 19.02.1999 DE 19907095
(43) Veröffentlichungstag der Anmeldung: 07.11.2001
(73) Patentinhaber: SIEMENS AKTIENGESELLSCHAFT, 80333 München (DE)
(72) Erfinder: OECHSLE, Walter, 90765 Fürth (DE); GEORGI, Axel, 01462 Dresden (DE)
(86) Internationale Anmeldenummer: PCT/DE2000/000437
(87) Internationale Veröffentlichungsnummer: WO 2000/049726

(56) Entgegenhaltungen:
- GB-A- 2 304 013
- Normenentwurf IEC 57/365/CD

## Beschreibung

Die Erfindung betrifft eine Ankoppelschaltung für eine Datenübertragungseinrichtung an ein elektrisches Energieübertragungsnetz. Dabei wird ein Energieübertragungsnetz, insbesondere ein zur Übertragung von elektrischer Energie dienendes Mittelspannungsnetz, zusätzlich als ein Übertragungsmedium für Daten genutzt, welche mittels einer Ankoppelschaltung kapazitiv in das Energieübertragungsnetz eingespeist bzw. daraus empfangen werden. Die Erfindung betrifft ferner eine Koppeleinheit, welche in Form eines Bauteiles eine Ankoppelschaltung der oben genannten Art enthält. Eine derartige Ankoppeleinheit ist mechanisch und elektrisch an eine Phase eines elektrischen Energieübertragungsnetzes anschließbar.

Aus der GB-A-2 304 013 ist eine Vorrichtung zum Ein- und Auskoppeln von Telekommunikationssignalen in ein Versorgungsnetz bekannt. Die Vorrichtung weist ein Filterelement auf, welches das Überkoppeln von Telekommunikationssignalen zwischen einem internen und einem externen Teil des Versorgungsnetzes unterdrückt.

Aus der DE 197 28 270 ist ein Informationsübertragungselement für Trennstellen in Versorgungsnetzen bekannt. Dieses soll eine Übertragung von Dateninformationen auch dann ermöglichen, wenn das Versorgungsnetz an der Trennstelle unterbrochen ist.

Aus der DE 31 46 987 ist ein eigendrahtloses Kommunikationssystem bekannt. Bei diesem sind Kommunikationsendgeräte zwischen Null- und Schutzleiter eines wohnungsinternen Stromversorgungsnetzes angeschlossen. Zur Verhinderung eines unbefugten Abhörens ist ein Sperrkreis zwischen einem Fehlerstromschutzschalter und den Kommunikationsendgeräten geschaltet.

Aus der DE 197 02 319 ist ein Verfahren und eine Einrichtung zur Datenankopplung von einem Feldbus auf Busankoppler für Anwendungsmodule bekannt. Dabei enthält jeder Busankoppler einen Mikrocontroller, um einen Datenaustausch zwischen dem Feldbus und unterschiedlichsten Anwendungsmodulen zu ermöglichen.

Aus der DE 197 25 115 A1 ist ein kapazitiver Niederspannungsphasenkoppler zur unterbrechungsfreien Frequenzübermittlung in Sicherungstrennstellen von vermaschten Niederspannungsverteilnetzen bekannt. Der Phasenkoppler weist dabei einen für die Frequenzübertragung geeigneten Koppelkondensator und einen hierzu in Reihe geschalteten Schmelzleiter auf.

Ankoppelschaltungen dieser Art sind beschrieben im Normenentwurf IEC 57/365/CD Committee Draft, IEC 57 "Power system control and associated communications", title "IEC 61334-3-22 Distribution automation using distribution line carrier systems - Part 3: mains signalling requirements - Section 22: MV phase-to-earth and screen-to-earth coupling devices". Der Normenentwurf wurde am 15.05.1998 veröffentlicht.

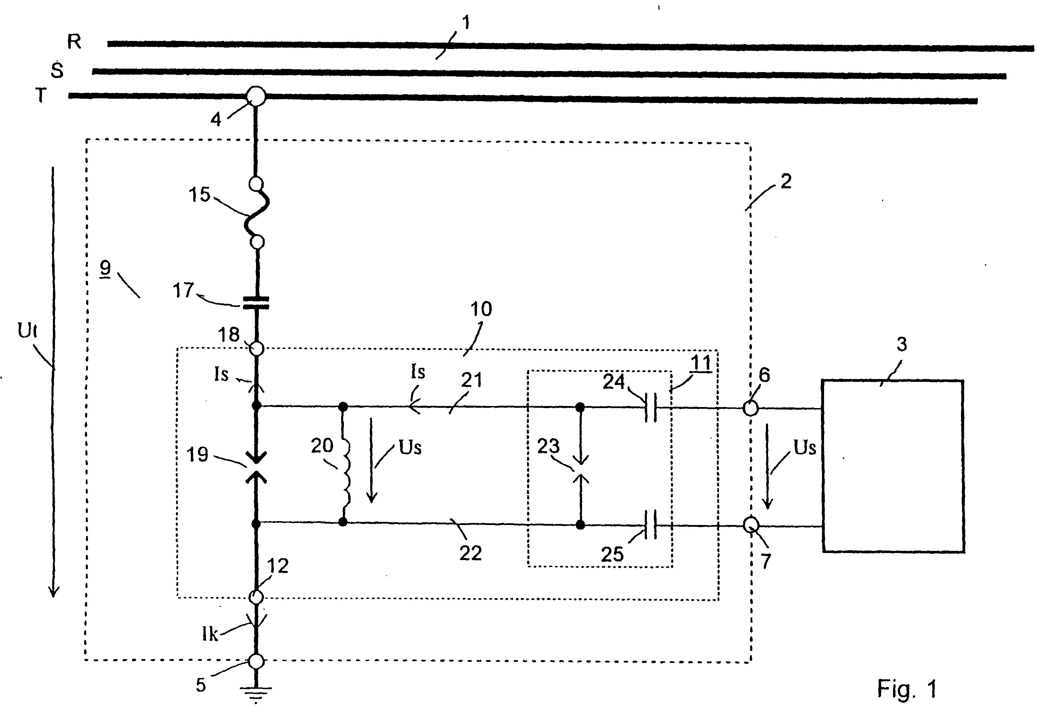

Auf der dortigen Seite 19 ist in Figure 1 der Aufbau einer bekannten Ankoppelschaltung am Beispiel eines Mittelspannungsnetzes dargestellt. Dabei ist eine Ankoppeleinrichtung (coupling device) über einen Koppelkondensator (coupling capacitor) an eine Phase des Energieübertragungsnetzes (MV power line) angeschlossen. Die Ankoppeleinrichtung weist hierzu auf der Mittelspannungsseite in Reihe zum Koppelkondensator eine Anschaltung (power-line voltage side) auf, welche mit einem Bezugspotential verbunden ist. Die wesentlichen Elemente dieser Anschaltung sind auf Seite 21 in Figure 3 dargestellt. Diese enthält eine Parallelschaltung aus einer Ableitspule (drain coil), einem Überspannungsableiter (lightning arrester) und einem Koppeltransformator (coupling transformer). Eine Datenübertragungseinrichtung zur Ein- und Auskopplung von Daten ist an die Sekundärseite des Koppeltransformators anschließbar.

Diese im Normenentwurf IEC 57/365/CD vom 15.05.1998 beschriebene Schaltung weist einige Nachteile auf. Diese beruhen darauf, die gesamte Strangspannung des Energieübertragungsnetzes am Koppelkondensator anliegt. Dieser muß Überspannungen aller Art, z.B. von Blitzeinschlägen herrührende Spannungsimpulse, standhalten und stellt somit ein gefährdetes Bauteil dar. Falls dieser z.B. auf Grund einer Alterung von dessen Dielektrikum durchlegiert, so fällt die gesamte Strangspannung des Energieübertragungsnetzes an der in der dortigen Figur 3 dargestellten Anschaltung ab. Dies hat zur Folge, daß der darin enthaltene Überspannungsableiter, welcher einen Grobspannungsschutz darstellt, stromführend wird und somit den Koppeltransformator und damit die Datenübertragungseinrichtung kurzschließt. Andererseits muß der gesamte Kurzschlußstrom in voller Höhe solange über den Überspannungsableiter fließen, bis eine übergeordnete Netzschutzeinrichtung im Energieübertragungsnetz anspricht. Erst dann wird der Kurzschlußstrom auf dem Wege einer totalen Abschaltung des betroffenen Teiles des Energieübertragungsnetzes unterbrochen. Der Überspannungsableiter muß folglich so ausgelegt sein, daß er nach einer Aktivierung den vollen Kurzschlußstrom aufnehmen kann. Dies hat eine sehr aufwendige und große Bauform des Überspannungsableiters zur Folge.

Ein weiterer Nachteil der im Normenentwurf IEC 57/365/CD beschriebenen Schaltung wird darin gesehen, daß die Anschaltung von Figur 3 einen Koppelkondensator erfordert. Schließlich tritt auch im fehlerfreien Betrieb der in Figur 1 dargestellten Schaltung der Nachteil auf, daß bei einer Abtrennung der Ankoppeleinrichtung z.B. zu Servicezwecken die volle Strangspannung des Energieübertragungsnetzes an dem nun freien Ende des Koppelkondensators anliegt. Hierdurch können Personen besonders gefährdet werden.

Der Erfindung liegt die Aufgabe zu Grunde, eine Ankoppelschaltung anzugeben, welche sich bei Auftritt eines internen Fehlers selbst vom Mittelspannungsnetz möglichst so abkoppelt, daß dessen Betrieb nicht beeinträchtigt wird.

Die Aufgabe wird gelöst mit einer Ankoppelschaltung gemäß dem Anspruch 1. Weitere, vorteilhafte Ausführungsformen der Erfindung sind in den Unteransprüchen enthalten. Ferner ist in weiteren Unteransprüchen eine Koppeleinheit angegeben, welche eine Ankoppelschaltung enthält.

Die erfindungsgemäße Ankoppelschaltung weist den besonderen Vorteile auf, daß sich diese im Falle eines internen Defektes, d.h. insbesondere im Falle der Durchlegierung des Koppelkondensators, selbst vom Energieübertragungsnetz abtrennt.

Da somit ein Kurzschluß in der Ankoppelschaltung nicht erhalten bleibt, sondern durch das erfindungsgemäße Zusammenspiel von Überspannungsableiter und Feinsicherung sehr schnell unterbrochen werden kann, wird eine doppelte Schutzfunktion bewirkt. Einerseits wird das Energieübertragungsnetz so geschützt, daß es betriebsfähig bleibt. Es müssen also nicht netzseitige Schutzeinrichtungen aktiv werden, um durch eine Abschaltung des betroffenen zweiges des Energieübertragungsnetzes den Kurzschluß in der Ankoppelschaltung zu unterbrechen. Andererseits kann mit der Erfindung auch ein besonderer Personenschutz bewirkt werden. Dieser ist einerseits in der schnellen Reaktionsgeschwindigkeit der erfindungsgemäßen Ankoppelschaltung zu sehen. Andererseits kann eine Reparatur an der Ankoppelstelle gefahrloser erfolgen.

Die erfindungsgemäße Ankoppelschaltung weist den weiteren Vorteile auf, daß der erforderliche Überspannungsableiter nur eine stark begrenzte Stromtragefähigkeit aufweisen muß. Diese muß es lediglich zu Beginn des Kurzschlußfalles ermöglichen, daß gerade so viel Strom in der Reihenschaltung fließen kann, um die Feinsicherung mit Sicherheit zum Auslösen zu bringen. Da in der Praxis zum schnellen Auslösen der Feinsicherung im Bereich von Millisekunden nur einige Ampere erforderlich sind, ist es in der Regel ausreichend, wenn die Stromtragefähigkeit des Überspannungsableiters zwar größer als der Auslösestrom der Feinsicherung ist, aber andererseits erheblich kleiner als der Nennwert des Kurzschlußstromes des angeschlossenen elektrischen Energieübertragungsnetzes ist. Die Abschaltung eines anklingenden Kurzschlußstromes in der Reihenschaltung erfolgt bei der erfindungsgemäßen Ankoppelschaltung so schnell, daß sich dieser nicht bis auf einen Wert aufbauen kann, welche die Stromtragefähigkeit des eingesetzte Überspannungsableiters überschreitet.

Eine Koppeleinheit gemäß der Erfindung weist isolierenden Werkstoff auf, der eine erfindungsgemäße Ankoppelschaltung nach einem der vorangegangenen Ansprüche gehäuseartig so umschließt, daß von außen zugänglich sind ein erster Anschluß der Reihenschaltung an eine Phase des elektrischen Energieübertragungsnetzes, ein zweiter Anschluß der Reihenschaltung an das Bezugspotential und ein dritter Anschluß der Ableitspule an eine Datenübertragungseinrichtung.

Vorteilhaft sind alle von der Strangspannung des Energieversorgungsnetzes belasteten Elemente der Ankoppelschaltung, d.h. insbesondere die Reihenschaltung aus der Feinsicherung, dem Koppelkondensator und dem Überspannungsableiter mit der parallelen Ableitspule, so komplett mit isolierendem Werkstoff umgeben, daß eine besonders hohe Personensicherheit gewährleistet ist. Es sind somit nur noch drei Anschlüsse von außen zugänglich, von denen der zweite Anschluß an das Bezugspotential und der dritte Anschluß an eine Datenübertragungseinrichtung bezüglich der Berührungsspannung für Personen völlig unkritisch sind. Der erste Anschluß an eine Phase des elektrischen Energieübertragungsnetzes kann dann als unkritisch angesehen werden, wenn seine Funktion als Phasenanschluß für Personen deutlich erkennbar ist. Dies ist besonders bei vorteilhaften Ausführungen der Koppeleinheit gegeben, bei der die Reihenschaltung aus Feinsicherung, Koppelkondensator und erstem Überspannungsableiter annähernd senkrecht im isolierenden Werkstoff angeordnet ist, und somit vorteilhaft die Koppeleinheit auch von außen eine mit einem Stützisolator vergleichbare Form aufweist.

Die vollständig gekapselte Anordnung der Ankoppelschaltung in isolierendem Werkstoff weist den weiteren Vorteil auf, daß bei einer derartigen Koppeleinheit insbesondere der Koppelkondensator für Personen nicht mehr zugänglich ist. Es besteht somit nicht mehr die Gefahr, daß trotz Verbindung des einen Anschlusses des Koppelkondensators mit einer Phase des Energieversorgungsnetzes eine Datenübertragungseinrichtung versehentlich vom anderen Anschluß des Koppelkondensators getrennt wird, und daraufhin die gesamte Phasenspannung an diesem Anschlußpunkt zugänglich ist. Erfindungsgemäß sind Koppelkondensator und Datenübertragungseinrichtung in der Koppeleinheit untrennbar miteinander verbunden.

Die Erfindung wird desweiteren anhand der in den nachfolgend kurz angeführten Figuren dargestellten Ausführungsbeispielen weiter erläutert. Dabei zeigt
- FIG 1: das Schaltbild einer bevorzugten Ausführung für eine Ankoppelschaltung gemäß der Erfindung, und
- FIG 2: die Schnittdarstellung durch eine bevorzugte Ausführung für eine Koppeleinheit gemäß der Erfindung.

Erfindungsgemäß weist die Feinsicherung elektrische Kennwerte auf, so daß diese weder von einem Strom Is einer Datenübertragungseinrichtung 3, noch von Überspannungen des elektrischen Energieübertragungsnetzes 1 ausgelöst wird. Als ein elektrischer Kennwert für eine derartige Dimensionierung der Feinsicherung im ungestörten Betrieb der Ankoppelschaltung ist deren Nennstromwert besonders geeignet. Erfindungsgemäß ist die Feinsicherung insbesondere durch eine ausreichend große Vorgabe des Nennstromwertes so zu dimensionieren, daß diese weder durch einen Strom der Datenübertragungseinrichtung noch durch Überspannungen des Energieübertragungsnetzes ausgelöst werden kann. Dabei sind als ein relevanter Strom der Datenübertragungseinrichtung insbesondere Sendeströme zu berücksichtigen, welche von der Datenübertragungseinrichtung über die Ankoppelschaltung in das Energieübertragungsnetz eingespeist werden, da diese häufig größer sind als Empfangsströme. Ferner sind als Überspannungen des Energieübertragungsnetzes z.B. Blitzstoßspannungen und sonstige, insbesondere in Mittelspannungsnetze üblicherweise auftretende Spannungstransienten zu berücksichtigen.

Erfindungsgemäß sind weiterhin die elektrischen Kennwerte der Feinsicherung 15 und des ersten Überspannungsableiters 19 so abzustimmen, daß im Falle einer Durchlegierung des Koppelkondensators 17 die Feinsicherung 15 bereits von einem anklingenden Kurzschlußstrom Ik durch den Überspannungsableiter 19 schnell und sicher ausgelöst wird. Als elektrische Kennwerte hierfür sind insbesondere die Stromtragefähigkeit des ersten Überspannungsableiters 19 und der Nennstromwert bzw. der Wert des Auslösestromes der Feinsicherung 15 geeignet.

Anhand der in Figur 1 dargestellten Schaltung soll eine vorteilhafte Ausführung einer Ankoppelschaltung gemäß der Erfindung näher erläutert werden.

Im oberen Bereich von Figur 1 ist ein elektrisches Energieübertragungsnetz 1 beispielhaft in Form von drei Phasensträngen R,S,T dargestellt. Bevorzugt handelt es sich dabei um ein Mittelspannungsnetz. Die erfindungsgemäße Ankoppelschaltung 2 für eine Datenübertragungseinrichtung 3 ist dabei über die Punkte 4 bzw. 5 beispielhaft an der Phase T des Energieübertragungsnetzes 1 bzw. an einem Bezugspotential 5 angeschlossen. Die Datenübertragungseinrichtung 3 ist über die Anschlußpunkte 6,7 angeschlossen. Zwischen diesen Punkten liegen Signalspannungen von insbesondere analog modulierten Datensignalen an, welche einen Signalspannungspegel Us aufweisen. Dabei können Daten durch Anlegen von Signalspannungen Us über die Ankoppelschaltung 2 in das Energieversorgungsnetz 1 eingespeist, bzw. daraus empfangen werden.

Zwischen den Anschlußpunkte 6 und 7, d.h. zwischen der Phase T und dem Bezugspotential 5 des Energieübertragungsnetzes 1, ist in der Ankoppelschaltung 2 eine Reihenschaltung 9 aus einer Feinsicherung 15, einem Koppelkondensator 17 und einem ersten Überspannungsableiter 19 angeordnet. Parallel zum ersten Überspannungsableiter 19 ist eine Ableitspule 20 angeschaltet, woran die Datenübertragungseinrichtung 3 ankoppelbar ist. Im Beispiel der Figur 1 werden die Signalspannungen Us der Datenübertragungseinrichtung 3 über Anschlußleitungen 21;22 zwischen den Anschlußpunkten 6,7 und der Ableitspule 20 geleitet. Die Signalspannungen verursachen einen Strom Is der Datenübertragungseinrichtung 3, der über den Anschlußpunkt 18 in die Reihenschaltung 9 und die Phase T des Energieübertragungsnetzes 1 fließt. Dabei muß die Feinsicherung 15 in der Reihenschaltung 9 derartige elektrische Kennwerte aufweisen, so daß diese weder von einem Strom Is, noch von Überspannungen des elektrischen Energieübertragungsnetzes 1 ausgelöst wird, welche über die an der Reihenschaltung 9 abfallenden Strangspannung Ut eingekoppelt werden.

Desweiteren sind elektrische Kennwerte der Feinsicherung 15 und des ersten Überspannungsableiters 19 erfindungsgemäß so abgestimmt, daß im Falle einer Durchlegierung des Koppelkondensators 17 die Feinsicherung 15 bereits von einem anklingenden Kurzschlußstrom Ik durch den Überspannungsableiter 19 schnell und sicher ausgelöst wird. Bei einer Durchlegierung wird der Koppelkondensator 17 leitend, so daß die Strangspannung Ut zunächst am Überspannungsableiter 19 anliegt. Dieser weist in der Praxis eine relativ niedrige Ansprechschwelle auf, welche bei einem Mittelspannungsnetz 1 einen Wert von etwa 200 V aufweisen kann. Da die im Kilovoltbereich liegende Strangspannung Ut erheblich größer ist, löst der Überspannungsableiter 19 Nannosekunden später aus und wird ebenfalls leitend. Es beginnt sich nun ein Kurzschlußstrom Ik zwischen der Phase T und dem Bezugspotential 5 aufzubauen. Da der Nennstromwert der Feinsicherung 15 auf Grund der Erfindung im Vergleich zum Nennwert des Kurzschlußstromes Ik klein sein kann, d.h. beispielsweise
10 ... 50 x Is, d.h. etwa 3 bis 5 Ampere
betragen kann, wird die Feinsicherung 15 bevor der Kurzschlußstromes Ik stark angewachsen ist schnell auslösen. Die fehlerhafte Ankoppelschaltung 2 trennt sich somit selbsttätig vom Energieversorgungsnetz 1 ab, ohne daß eine zwangsweise Abschaltung des Energieversorgungsnetzes zur Löschung des Kurzschlusses erforderlich ist.

Die im Beispiel der Figur 1 dargestellte Ankoppelschaltung 2 weist vorteilhaft eine zusätzliche Schutzschaltung 11 auf, welche aus Gründen der Redundanz und des Feinschutzes zumindest einen zweiten Überspannungsableiter 23 parallel zur Ableitspule 20 enthält. Vorteilhaft sind der erste und zweite Überspannungsableiter 19,23 weitgehend baugleich ausgeführt. Ferner enthält die Schutzschaltung 11 in einer jeden Zuleitung 21,22 zu den Anschlußpunkten 6,7 der Datenübertragungseinrichtung 3 zusätzlich jeweils einen Filterkondensator 24,25. Hiermit können energietechnische Frequenzen aus der Phase T, welche in der Größenordnung von 50 bis 60 Herz und Vielfachen davon liegen, von der Datenübertragungseinrichtung 3 ferngehalten werden.

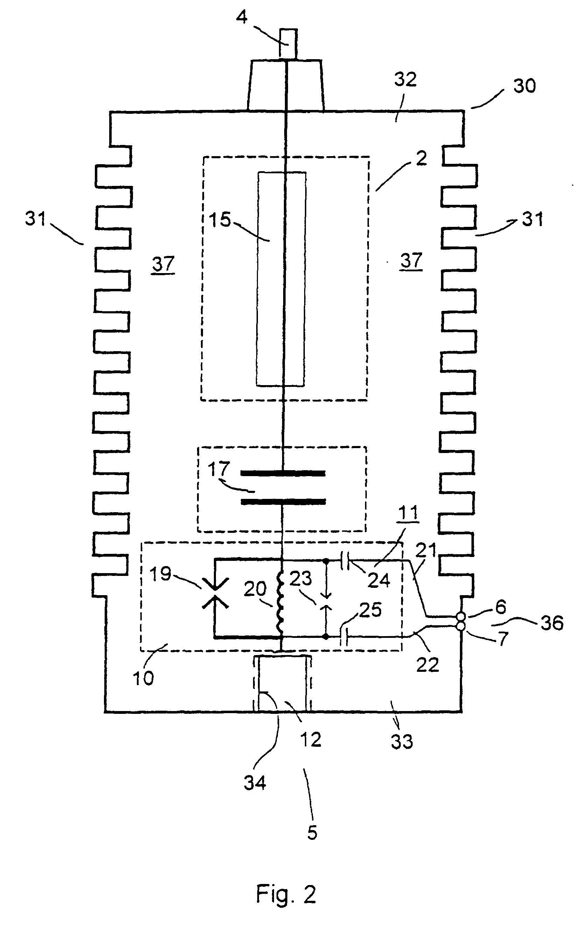

Anhand des in der Figur 2 dargestellten Ausführungsbeispieles soll eine vorteilhafte Ausführung einer Koppeleinheit, d.h. ein vorteilhafter mechanischer Aufbau einer Ankoppelschaltung gemäß der Erfindung näher erläutert werden.

Vorteilhaft sind dabei alle Elemente der Ankoppelschaltung, d.h. die Reihenschaltung aus der Feinsicherung 15, dem Koppelkondensator 16 und dem Überspannungsableiter 19 mit der parallelen Ableitspule 20 und einer eventuellen zusätzlichen Schutzschaltung 11 komplett mit einem elektrisch isolierenden Werkstoff 37 gehäuseartig umgeben. Bevorzugt sind die Bauteile mit Epoxydharz umspritzt oder in Keramik eingebettet. Es entsteht somit eine Koppeleinheit mit einer gehäuseartigen äußeren Form 30. Dies hat den Vorteil, daß keines der Element zugänglich und somit nach Eintritt eines Fehlers austauschbar ist. Da vielmehr davon ausgegangen werden muß, daß nach Auftreten eines Kurzschlusses alle Bauteile im Inneren zerstört sind, d.h. die Feinsicherung und der Überspannungsableiter durchgeschmolzen und der Koppelkondensator durchlegiert ist, ist die Koppeleinheit als ganzes auszutauschen.

Der besondere Vorteil der Koppeleinheit 30 besteht darin, daß nur noch drei Anschlüsse der Ankoppelschaltung 2 von außen zugänglich sind. Bei der in Figur 2 dargestellten, bevorzugten Ausführung der Koppeleinheit, welche eine annähernd senkrecht im isolierenden Werkstoff angeordnete Reihenschaltung 9 aus Feinsicherung 15, Koppelkondensator 17 und erstem Überspannungsableiter 19 aufweist, befindet sich der erste Anschlußpunkt 4 der Reihenschaltung 9 an die Phase des Energieversorgungsnetzes am Kopfbereich 32. Der zweite, von außen zugängliche Anschlußpunkt 12 der Reihenschaltung 9 an das Bezugspotential 5 befindet sich am Bodenbereich 33. Dieser ist vorteilhaft mit einem Innengewinde 34 ausgestattet, um eine sichere Masseverbindung herzustellen. Schließlich ist der dritte Anschlußpunkt 6,7 für eine Verbindung der Ableitspule 20 mit einer externen Datenübertragungseinrichtung, welcher vorteilhaft in Form einer Steckbuchse 36 ausgeführt ist, in einem Mantelbereich 31 angeordnet.

Besonders vorteilhaft weist die Koppeleinheit 30 eine mit einem Stützisolator vergleichbare, bevorzugt zylindrische äußere Form auf. Dabei kann der den Mantel bildende Teil des elektrisch isolierenden Werkstoffes 37 zur Erhöhung der Spannungsfestigkeit mit rippenförmigen Kriechstrecken 31 versehen sein, welche auch als Isolationsschirme bezeichnet werden können. Ferner ist es vorteilhaft, wenn im Inneren der Koppeleinheit zumindest die Parallelschaltung aus dem ersten Überspannungsableiter 19 und der Ableitspule 20 auf einer Flachbaugruppe 10 angeordnet ist. Eine zusätzliche Schutzschaltung 11 kann ebenfalls darauf angeordnet sein. Diese Flachbaugruppe 10 ist in der gleichen Weise wie alle anderen Bauteile unzugänglich im Inneren des Werkstoffes 37 eingebettet.

Die Ankoppelschaltung und die Koppeleinheit gemäß der Erfindung weisen somit eine vorteilhafte Doppelfunktion auf. Einerseits werden die Datenübertragungseinrichtung und Personen gegen Überspannungen aus dem Energieübertragungsnetz geschützt. Andererseits wird das Energieübertragungsnetz gegen Fehlfunktionen der Ankoppelschaltung geschützt, d.h. insbesondere einer Durchlegierung des Koppelkondensators.

## Patentansprüche

1. Ankoppelschaltung (2), die ein elektrisches Energieübertragungsnetz (1) umfaßt, für eine Datenübertragungseinrichtung (3), wobei die Ankoppelschaltung (2) an eine Phase (T) des elektrischen Energieübertragungsnetzes (1) angeschlossen ist, mit
a) einer Reihenschaltung (9) aus einem Koppelkondensator (17) und einem ersten Überspannungsableiter (19), die zwischen der Phase (T) und einem Bezugspotential (5) des elektrischen Energieübertragungsnetzes (1) angeordnet ist, und
b) einer Ableitspule (20), die parallel zum ersten Überspannungsableiter (19) angeschaltet ist und woran die Datenübertragungseinrichtung (3) ankoppelbar ist (6,7), wobei
c) eine Feinsicherung (15) in der Reihenschaltung (9) an der Phase (T) angeordnet ist und solche elektrische Kennwerte aufweist, dass diese weder von einem Strom (Is) der Datenübertragungseinrichtung (3) noch von Überspannungen des elektrischen Energieübertragungsnetzes (1) ausgelöst wird, und
d) die elektrischen Kennwerte der Feinsicherung (15) und die Stromtragfähigkeit des ersten Überspannungsableiters (19) so abgestimmt sind, dass im Falle einer Durchlegierung des Koppelkondensators (17) die Feinsicherung (15) bereits von einem anklingenden Kurzschlussstrom (Ik) durch den Überspannungsableiter (19) schnell und sicher ausgelöst wird, wobei der Wert der Stromtragefähigkeit des ersten Überspannungsableiters (19) kleiner ist als der Wert des Kurzschlussnennstromes des elektrischen Energieübertragungsnetzes (1).

2. Ankoppelschaltung nach Anspruch 1, mit einem Mittelspannungsnetz als elektrisches Energieübertragungsnetz (1).

3. Ankoppelschaltung nach Anspruch 1 oder 2, mit einer Schutzschaltung (11), welche einen zweiten Überspannungsableiter (23) parallel zur Ableitspule (20) aufweist.

4. Ankoppelschaltung nach Anspruch 3, **dadurch gekennzeichnet, daß** der erste und zweite Überspannungsableiter (19,23) weitgehend baugleich ausgeführt sind.

5. Ankoppelschaltung nach Anspruch 3 oder 4, **dadurch gekennzeichnet, daß** die Schutzschaltung (11) zumindest einen Filterkondensator (24,25) in einer Zuleitung (21,22) der Datenübertragungseinrichtung (3) aufweist.

6. Koppeleinheit mit elektrisch isolierendem Werkstoff (37), der eine Ankoppelschaltung (2) nach einem der vorangegangenen Ansprüche gehäuseartig (30) so umschließt, dass von außen zugänglich sind
a) ein erster Anschluss (4) der Reihenschaltung (9) an eine Phase (T) des elektrischen Energieübertragungsnetzes (1),
b) ein zweiter Anschluss (12) der Reihenschaltung (9) an das Bezugspotential (5) und
c) ein dritter Anschluss (6,7;36) der Ableitspule (20) an die Datenübertragungseinrichtung (3).

7. Koppeleinheit nach Anspruch 6, **gekennzeichnet durch** Expoydharz als isolierenden Werkstoff (37).

8. Koppeleinheit nach einem der Ansprüche 6 oder 7, wobei die Reihenschaltung (9) aus Feinsicherung (15), Koppelkondensator (17) und erstem Überspannungsableiter (19) annähernd senkrecht im isolierenden Werkstoff (37) angeordnet ist.

9. Koppeleinheit nach Anspruch 6 bis 8, **gekennzeichnet durch** eine mit einem Stützisolator vergleichbare äußere Form.

10. Koppeleinheit nach einem der Ansprüche 6 bis 9, wobei zumindest die Parallelschaltung aus dem ersten Überspannungsableiter (19) und der Ableitspule (20) auf einer Flachbaugruppe (10) angeordnet ist.

## Claims

1. Coupling circuit (2), which comprises an electrical power transmission network (1), for a data transmission device (3), with the coupling circuit (2) being connected to one phase (T) of the electrical power transmission network (1), having
a) a series circuit (9) which comprises a coupling capacitor (17) and a first surge arrestor (19), and is arranged between the phase (T) and a reference-earth potential (5) of the electrical power transmission network (1), and
b) a discharge coil (20) which is connected in parallel with the first surge arrestor (19) and on to which a data transmission device (3) can be coupled (6, 7), wherein
c) a micro fuse (15) is arranged in the series circuit (9) on the phase (T) and has such electrical characteristics that it is not tripped either by a current (Is) from a data transmission device (3) or by overvoltages on the electrical power transmission network (1), and
d) the electrical characteristics of the micro fuse (15) and the current carrying capacity of the first surge arrestor (19) are matched such that, if the coupling capacitor (17) breaks down, the micro fuse (15) is tripped quickly and reliably even by a rising short-circuit current (Ik) through the surge arrestor (19) wherein the value of the current carrying capacity of the first surge arrestor (19) is less than the value of the rated short-circuit current of the electrical power transmission network (1).

2. Coupling circuit according to Claim 1, having a medium-voltage network as the electrical power transmission network (1).

3. Coupling circuit according to Claim 1 or 2, having a protection circuit (11), which has a second surge arrestor (23) in parallel with the discharge coil (20).

4. Coupling circuit according to Claim 3, **characterized in that** the first and second surge arrestors (19, 23) are constructed largely in the same way.

5. Coupling circuit according to Claim 3 or 4, **characterized in that** the protection circuit (11) has at least one filter capacitor (24, 25) in a supply line (21, 22) of a data transmission device (3).

6. Coupling unit having an electrically insulating material (37) which encloses a coupling circuit (2) as claimed in one of the preceding claims like a housing (30) such that the following are accessible from the outside:
a) a first connection (4) of the series circuit (9) to one phase (T) of the electrical power transmission network (1),
b) a second connection (12) of the series circuit (9) to the reference-earth potential (5), and
c) a third connection (6, 7; 36) of the discharge coil (20) to the data transmission device (3).

7. Coupling unit according to Claim 6, **characterized by** epoxy resin as the insulating material (37).

8. Coupling unit according to one of claims 6 or 7, wherein the series circuit (9) comprising the micro fuse (15), coupling capacitor (17) and first surge arrestor (19) is arranged approximately vertically in the insulating material (37).

9. Coupling unit according to Claims 6 to 8, **characterized by** an external shape comparable to a support insulator.

10. Coupling unit according to one of Claims 6 to 9, wherein at least the parallel circuit comprises the first surge arrestor (19) and the discharge coil (20) is arranged on a flat module (10).

## Revendications

1. Circuit de couplage (2) qui comprend un réseau de transmission d'énergie électrique (1) et qui est destiné à un dispositif de transmission de données (3), le circuit de couplage (2) étant raccordé à une phase (T) du réseau de transmission d'énergie électrique (1), comportant
a) un montage en série (9) d'un condensateur de couplage (17) et d'un premier parasurtension (19), qui est placé entre la phase (T) et un potentiel de référence (5) du réseau de transmission d'énergie électrique (1), et
b) une bobine de dérivation (20) qui est branchée en parallèle avec le premier parasurtension (19) et à laquelle le dispositif de transmission de données (3) peut être raccordé (6, 7), tel que
c) un fusible fin (15) est placé dans le montage en série (9) sur la phase (T) et comporte des valeurs caractéristiques électriques telles qu'il n'est déclenché ni par un courant (Is) du dispositif de transmission de données (3) ni par des surtensions du réseau de transmission d'énergie électrique (1), et
d) les valeurs caractéristiques électriques du fusible fin (15) et la conductibilité du premier parasurtension (19) sont accordées de telle sorte que, dans le cas d'un claquage du condensateur de couplage (17), le fusible fin (15) est déjà déclenché rapidement et sûrement par un courant de court-circuit croissant (Ik) à travers le parasurtension (19), la valeur de la conductibilité du premier parasurtension (19) étant inférieure à la valeur du courant nominal de court-circuit du réseau de transmission d'énergie électrique (1 ).

2. Circuit de couplage selon la revendication 1 comportant un réseau de tension moyenne comme réseau de transmission d'énergie électrique (1).

3. Circuit de couplage selon la revendication 1 ou 2, comportant un circuit protecteur (11) qui comporte un deuxième parasurtension (23) en parallèle avec la bobine de dérivation (20).

4. Circuit de couplage selon la revendication 3, **caractérisé par le fait que** le premier et le deuxième parasurtension (19, 23) ont une structure largement identique.

5. Circuit de couplage selon la revendication 3 ou 4, **caractérisé par le fait que** le circuit protecteur (11) comporte au moins un condensateur de filtrage (24, 25) dans une ligne d'amenée (21, 22) du dispositif de transmission de données (3).

6. Unité de couplage comportant un matériau d'isolation électrique (37), qui entoure un circuit de couplage (2) selon l'une des revendications précédentes à la manière d'un boîtier (30) de telle sorte que sont accessibles de l'extérieur :
a) une première connexion (4) du montage en série (9) à une phase (T) du réseau de transmission d'énergie électrique (1),
b) une deuxième connexion (12) du montage en série (9) au potentiel de référence (5), et
c) une troisième connexion (6, 7 ; 36) de la bobine de dérivation (20) au dispositif de transmission de données (3).

7. Unité de couplage selon la revendication 6, **caractérisée par** une résine époxy comme matériau isolant (37).

8. Unité de couplage selon l'une des revendications 6 ou 7, le montage en série (9) du fusible fin (15), du condensateur de couplage (17) et du premier parasurtension (19) étant disposé sensiblement verticalement dans le matériau isolant (37).

9. Unité de couplage selon l'une des revendications 6 à 8, **caractérisée par** une forme extérieure comparable à un support isolant.

10. Unité de couplage selon l'une des revendications 6 à 9, au moins le montage en parallèle du premier parasurtension (19) et de la bobine de dérivation (20) étant placé sur un module plat (10).
